Europäisches Patentamt

European Patent Office

Office européen des brevets

(11) Veröffentlichungsnummer: **0 036 978**
**B1**

(12) **EUROPÄISCHE PATENTSCHRIFT**

(45) Veröffentlichungstag der Patentschrift:
**29.06.83**

(21) Anmeldenummer: **81101794.6**

(22) Anmeldetag: **11.03.81**

(51) Int. Cl.³: **A 47 J 36/00**, A 47 J 36/06,
C 25 D 7/00, C 23 D 5/00,
B 21 D 51/22

---

(54) **Verfahren zum Herstellen von emaillierten Küchengeschirren.**

---

(30) Priorität: **01.04.80 DE 3012719**

(43) Veröffentlichungstag der Anmeldung:
**07.10.81 Patentblatt 81/40**

(45) Bekanntmachung des Hinweises auf die Patenterteilung:
**29.06.83 Patentblatt 83/26**

(84) Benannte Vertragsstaaten:
**AT BE CH DE FR GB IT LI LU NL SE**

(56) Entgegenhaltungen:
**AT-B-205 693**
**CH-A-204 202**

(73) Patentinhaber: **WÜRTTEMBERGISCHE METALLWARENFABRIK AG., Postfach 76, D-7340 Geislingen/Steige (DE)**

(72) Erfinder: **Paulus, Max, Mühlbachstrasse 1, D-7340 Geislingen-Eybach (DE)**
Erfinder: **Schwarz, Hermann, Wölkstrasse 75, D-7340 Geislingen/Steige (DE)**

(74) Vertreter: **Patentanwälte Grünecker, Dr. Kinkeldey, Dr. Stockmair, Dr. Schumann, Jakob, Dr. Bezold, Meister, Hilgers, Dr. Meyer-Plath, Maximilianstrasse 58, D-8000 München 22 (DE)**

Verfahren zum Herstellen von emaillierten Küchengeschirren

Die Erfindung betrifft ein Verfahren nach dem Oberbegriff des Anspruchs 1.

Der Randbereich emaillierter Geschirre bedarf einer besonderen Verkleidung, da an Randbereichen Email leicht abspringt. Aus diesen Gründen ist bekannt, Ränder von Töpfen und Deckeln mit einem extra gefertigten Ring zu versehen, z.B. aus nicht rostendem Stahl. Unter solchen Ringen können sich jedoch Verunreinigungen ansammeln, die schlecht zu entfernen sind. Aus diesem Grund ist für Kochtöpfe ein Verfahren der eingangs beschriebenen Art bekannt, bei welchem die Emailschicht am Topfrand entfernt und eine Nickel- bzw. Chromschicht galvanisch angebracht wird (AT-B-205 693). Dieses Verfahren ist aufwendig, da Email sich nur schwer entfernen lässt. Email im Randbereich lässt sich auch bei einer Abdeckung nicht völlig vermeiden, ausserdem läuft auch ein abgedeckter, nicht emaillierter Randbereich an und muss geschliffen werden. Die Notwendigkeit, aus optischen Gründen eine scharfe Begrenzungslinie zwischen Email- und Schlefffläche herzustellen, erhöht die Schwierigkeiten des Verfahrens. Da Topfränder selten eine ideale Kreisform aufweisen, muss beim Schleifvorgang relativ viel Material abgetragen werden, der Rand wird dünn. Am Topfdeckel lässt sich wegen der ohnehin geringen Dicke dieses Verfahrens besonders schlecht anwenden, schon weil der Topfdeckel dadurch einen unerwünscht scharfen Rand bekommen würde. Wichtig ist ferner, dass bei den Schleifarbeiten die Emailschicht möglichst senkrecht angeschliffen wird. Ein flacher Winkel führt dazu, dass das im Chrombad nicht beständige Grundemail freigelegt und damit einem Angriff ausgesetzt wird.

Aufgabe der Erfindung ist es, ein Verfahren der eingangs beschriebenen Art zu schaffen, bei dem das Schleifen, auch bei dünnen Randbereichen, einfach und exakt durchzuführen und die galvanische Schicht genau an die Emailschicht anzuschliessen ist, und bei dem das Geschirr einen ausreichend steifen Randbereich behält.

Die Aufgabe wird erfindungsgemäss durch das Kennzeichen des Anspruches 1 gelöst.

Der umgeschlagene Randstreifen ergibt durch seine Stirnkante eine exakte Abgrenzung gegenüber der Emailschicht. Die zu schleifende Fläche ist genau definiert, die Galvanikschicht exakt abgegrenzt. Damit ergibt sich eine dekorative Wirkung durch den sauber abgegrenzten Metallrand. Der beim Falzen umgeschlagene Randstreifen verdoppelt ausserdem am Randbereich die Materialstärke, so dass auch nach dem Schleifen ein stabiler Randbereich verbleibt. Dies ermöglicht, das Verfahren auch auf Geschirre und Deckel von geringer Materialstärke anzuwenden. Durch das Umschlagen ergibt sich eine relativ breite Stirnfläche.

Vorteilhaft wird die Emailschicht etwa senkrecht angeschliffen. Dies erfolgt in einfacher Weise dadurch, dass an der dem umgeschlagenen Randbereich gegenüberliegenden Wand die Emailschicht bis zur Stirnfläche beibehalten und beim Flachschleifen der durch das Falzen gerundeten Stirnfläche über das Ende der Emailschicht geschliffen wird.

Die Durchführung des erfindungsgemässen Verfahrens wird anschliessend anhand der einzelne Herstellungsphasen und Ausführungsbeispiele nach dem Verfahren hergestellter Geschirre zeigenden Figuren beschrieben.

Es zeigen:

Fig. 1 im Schnitt einen randnahen Teilbereich eines vorgeformten Rohlings für einen Topfdeckel,

Fig. 2 den gleichen Bereich mit zwei Emailschichten,

Fig. 3 den gleichen Bereich nach einem Schleifvorgang,

Fig. 4 den gleichen Bereich fertiggestellt,

Fig. 5 die Figuren 5 bis 9 jeweils randnahe Teilbereiche anderer Ausführungsformen fertiggestellter Topfdeckel,

Fig. 10 und 11 jeweils einen randnahen Teilbereich eines fertiggestellten Steckdeckels, und

Fig. 12 und 13 jeweils einen randnahen Teilbereich eines fertiggestellten Kochtopfes.

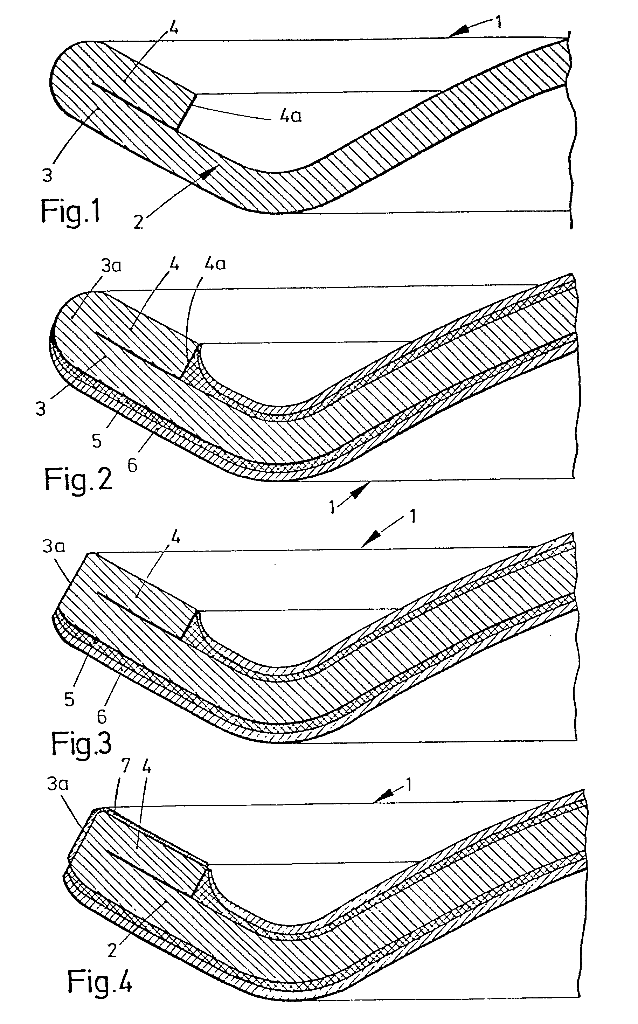

In den Figuren 1 bis 4 ist anhand eines im Schnitt dargestellten randnahen Teilbereiches eines Auflage-Topfdeckels 1 dessen Behandlung nach dem erfindungsgemässen Verfahren dargestellt, ausgehend von dem in Fig. 1 dargestellten vorgeformten Rohlings 2 aus Stahlblech. Sein nach aussen oben gebogener Randbereich 3 ist umgefalzt, wobei ein umgeschlagener Randstreifen 4 eng an der Oberseite des Randbereiches 3 anliegt.

Fig. 2 zeigt den Teilbereich, nachdem auf den Deckel 1 zunächst eine Schicht Grundemail 5 und dann auf diese eine weitere Emailschicht 6 aufgetragen wurde. Dabei wurde die Stirnfläche 3a des Randbereiches 3 und die Aussenfläche des Randstreifens 4 durch Abdecken so weit als möglich von Email freigehalten. Auf der auch in der Zeichnung oberen Oberfläche des Deckels enden die Emailschichten etwa an der Stirnfläche 4a des Randstreifens 4.

Als nächster Arbeitsgang des Verfahrens wird die Oberfläche des Randstreifens 4 und die Stirnfläche 3a des Randbereiches abgeschliffen. Das Ergebnis dieses Arbeitsganges zeigt Fig. 3. Beim Schleifen der Stirnfläche 3a werden die in diesem Bereich endenden beiden Emailschichten 5 und 6 etwa senkrecht angeschliffen.

Im weiteren Arbeitsverlauf werden auf die Oberfläche des Randstreifens 4 und die Stirnfläche 3a eine Galvanikschicht 7 aufgetragen, die aus Chrom oder Nickel besteht. Fig. 4 zeigt den derart fertiggestellten Randbereich, wobei die Galvanikschicht unmassstäblich dicker als in der Praxis dargestellt ist. Die Galvanikschicht 7 grenzt beidseits exakt an die Emailschichten an und schützt mit diesen zusammen den Stahlblech-Rohling vor Rost. Der Randbereich 3 weist eine die übrige Deckeldicke übertreffende Materialstärke und damit eine erhöhte Steifigkeit auf.

In den folgenden Figuren, die weitere fertiggestellte Ausführungsformen von Geschirren zeigen, werden die einzelnen Bestandteile, d.h. der jeweilige Stahlblech-Rohling und die Beschichtungen, mit den gleichen Bezugszeichen wie in den Figuren 1 bis 4 bezeichnet.

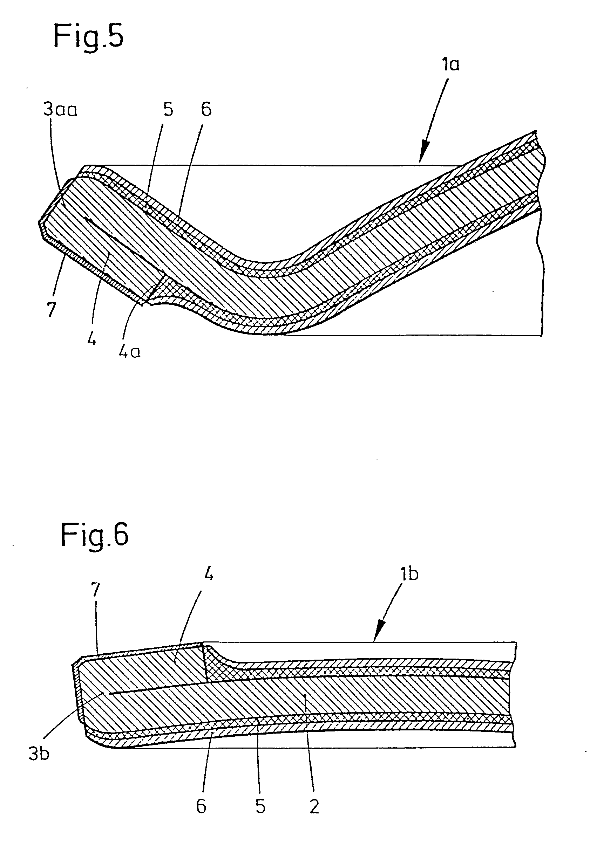

Fig. 5 zeigt einen Auflagedeckel 1a, dessen Form im wesentlichen mit dem des Auflagedeckels 1 von Fig. 4 übereinstimmt. Der Unterschied besteht lediglich darin, dass sein Randbereich 3aa entgegengesetzt gefalzt wurde, d.h. der Randstreifen 4 wurde zur Unterseite des Deckels hin umgeschlagen und an diese angelegt. Im übrigen erfolgte die weitere Beschichtung und Bearbeitung analog zu dem in Fig. 1 bis 4 Geschilderten. Dies gilt auch für alle weiteren Figuren, so dass im folgenden darauf nicht mehr eingegangen wird.

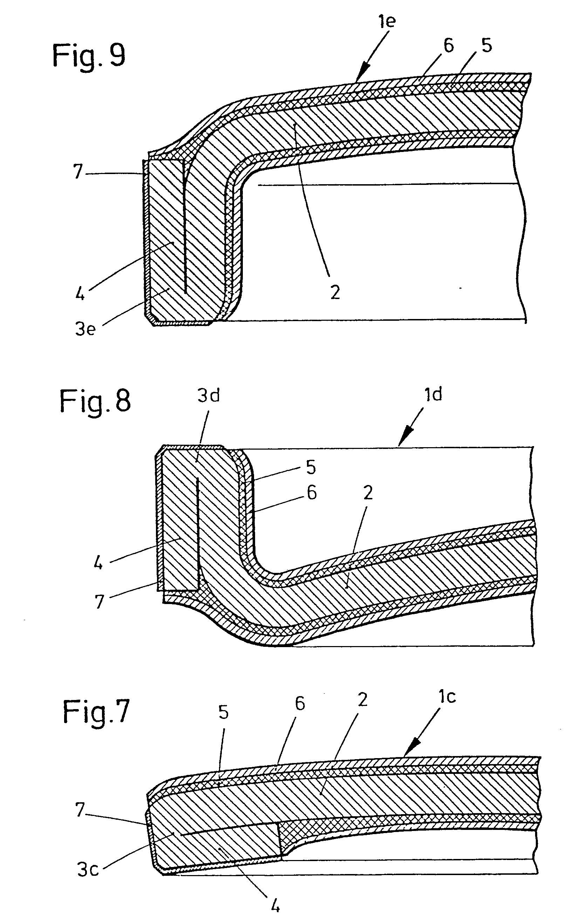

Die Figuren 6 und 7 zeigen Auflagedeckel 1b bzw. 1c, deren Randbereiche 3b bzw. 3c mit der leichten Wölbung des jeweiligen Deckels fluchten. Bei dem Auflagedeckel 1b ist der Randstreifen 4 zur Oberseite des Deckels, beim Auflagedeckel 1c zur Unterseite des Deckels hin umgefalzt.

Fig. 8 zeigt einen Auflagedeckel 1d, dessen Randbereich 3d etwa vertikal nach oben gebogen und dessen Randstreifen 4 nach aussen umgefalzt wurde.

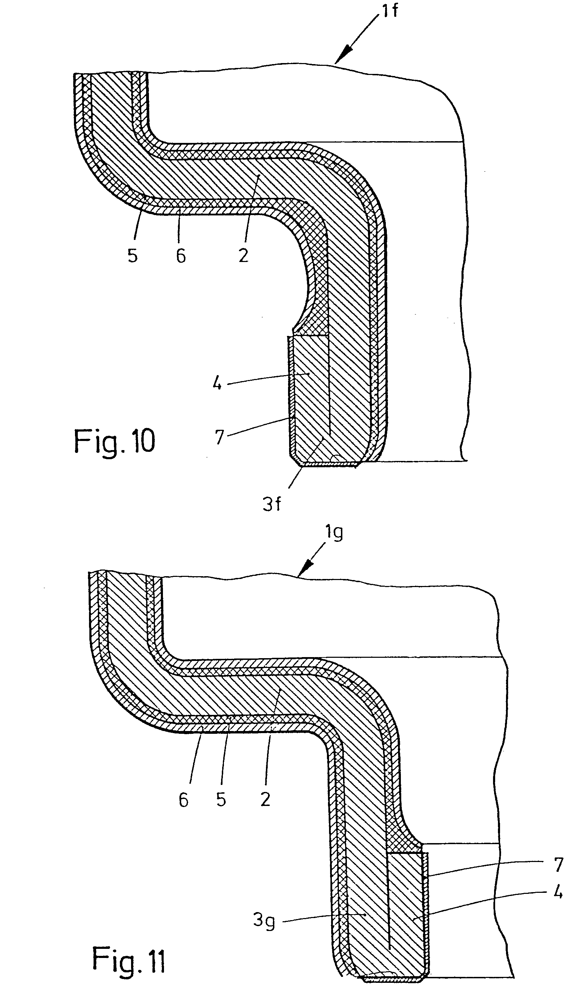

Die Figuren 9 bis 11 zeigen jeweils randnahe Bereiche von sogenannten Steckdeckeln 1e, 1f und 1g. Die jeweiligen Randbereiche 3e, 3f bzw. 3g bilden einen Ringrand, der dem Innendurchmesser des Topfes, für den der Deckel bestimmt ist, entspricht. Bei den Deckeln 1e und 1f ist der Randbereich 3e bzw. 3f jeweils nach aussen oben, beim Steckdeckel 1g nach innen oben umgefalzt.

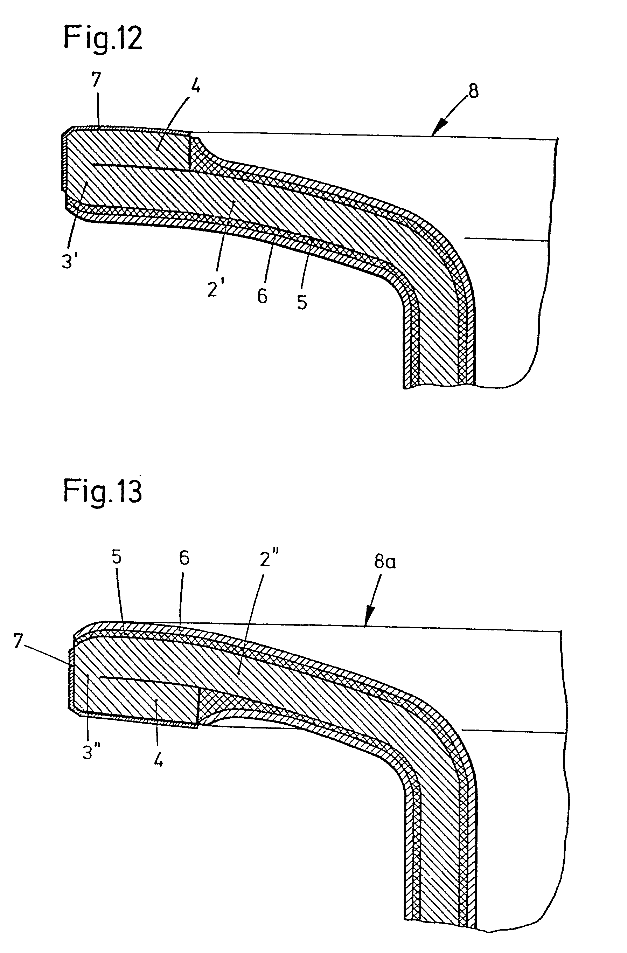

Die Figuren 12 und 13 zeigen jeweils im Schnitt einen randnahen Teilbereich eines Kochtopfes 8 bzw. 8a. Die Töpfe 8 bzw. 8a bestehen jeweils aus Stahlblech-Rohlingen 2' bzw. 2''. Deren Randbereiche 3' bzw. 3'' erstrecken sich vom Topfkörper etwa radial nach aussen. Sie sind in einer den bereits geschilderten Deckelformen entsprechenden Weise umgefalzt, und zwar der Randbereich 3' des Topfes 8 nach oben innen, der Randbereich 3'' des Topfes 8a nach unten innen. Die Töpfe 8 bzw. 8a sind jeweils ebenfalls mit einer Grundemailschicht 5 und einer Emailschicht 6 versehen, und die Randbereiche 3' bzw. 3'' in der bereits geschilderten Weise abgeschliffen und mit einer Galvanikschicht 7 versehen worden.

Das erfindungsgemässe Verfahren ist nicht auf die gezeigten Ausführungsbeispiele beschränkt. So kann es ausser für Kochtöpfe und Deckel auch für andere emaillierte Geräte, beispielsweise Schüsseln, angewendet werden.

## Patentansprüche

1. Verfahren zum Herstellen von emaillierten Küchengeschirren, insbesondere Töpfen und Topfdeckeln, aus Stahlblech mit galvanisiertem Randbereich, wobei das Geschirr aus Stahlblech geformt, ganz oder teilweise mit einem Emailüberzug versehen, der Randbereich abgeschliffen und anschliessend galvanisiert wird, dadurch gekennzeichnet, dass der Geschirrand vor dem Emaillieren umgefalzt wird, wobei der umgeschlagene Randstreifen an den Randbereich angelegt wird und der umgeschlagene Randstreifen und die Randstirnfläche nach dem Emaillieren bearbeitet werden.

2. Verfahren nach Anspruch 1, dadurch gekennzeichnet, dass die Emailschicht etwa senkrecht angeschliffen wird.

## Claims

1. A method for manufacturing, from steel plate, enamelled kitchen utensils, in particular pots and pot lids, with an electroplated rim region, wherein the utensil is formed from steel plate, is provided completely or partially with an enamel coating, then the rim region is ground down and is finally electroplated, characterised in that the rim of the utensil is crimped-over before enamelling, the turned-down strip of the rim being laid against the rim region, and the turned-down strip of the rim and the edge surface of the rim are machined after the enamelling.

2. A method as claimed in claim 1, characterised in that the enamel layer is ground approximately perpendicularly.

## Revendications

1. Procédé de fabrication d'ustensiles de cuisine émaillés, en particulier, de casseroles et de couvercles de casseroles, en tôle d'acier comportant une région marginale galvanisée, ledit ustensile étant formé de tôle d'acier, pourvu entièrement ou partiellement d'un revêtement d'émail, sa région marginale étant meulée et ensuite galvanisée, c'est-à-dire, pourvue d'un dépôt électrolytique, caractérisé en ce que, avant l'émaillage, on replie le bord de l'ustensile en produisant ainsi une bande marginale repliée s'appliquant contre ladite région marginale, et en ce qu'on traite, après l'émaillage, la bande marginale ainsi rabattue et la surface frontale de cette bande marginale.

2. Procédé selon la revendication 1, caractérisé en ce qu'on meule la couche d'émail approximativement à angle droit.

Fig.1

Fig.2

Fig.3

Fig.4

# Fig.5

# Fig.6

Fig. 9

Fig. 8

Fig. 7

Fig. 10

Fig. 11

## Fig.12

## Fig.13